## Europäisches Patentamt
## European Patent Office
## Office européen des brevets

(11) Veröffentlichungsnummer: **0 038 074**
**A2**

(12) **EUROPÄISCHE PATENTANMELDUNG**

(21) Anmeldenummer: **81102845.5**

(22) Anmeldetag: **14.04.81**

(51) Int. Cl.³: **F 24 J 3/02**

(30) Priorität: **16.04.80 HU EP000928**

(43) Veröffentlichungstag der Anmeldung: **21.10.81**
**Patentblatt 81/42**

(84) Benannte Vertragsstaaten: **AT CH DE FR IT LI**

(71) Anmelder: **EPITÖIPARI SZÖVETKEZETI KÖZÖS VALLALAT BARCS, H-7570 Barcs (HU)**

(72) Erfinder: **Ördögh, Zoltán, Dr., Dipl.-Ing., Minerva u.7., Budapest XI (HU)**
Erfinder: **Meszlényi, Zoltán, Dipl.-Ing., Balatonföldvár, József A. utca 53/a. (HU)**

(74) Vertreter: **Patentanwälte, Dipl.-Ing. Klaus Westphal Dr. rer. nat. Bernd Mussgnug Dr. rer. nat. Otto Buchner, Flossmannstrasse 30a, D-8000 München 60 (DE)**

(54) **Sonnenkollektor.**

(57) Die Erfindung bezieht sich auf einen Wärmekollektor, insbesondere zur Aufnahme und Verwertung der Wärmeenergie der Sonnenstrahlung, der einen aus Aluminium hergestellten Wärmeaustauscher, den sogenannten Absorber enthält. Dem Absorber ist ein zur Durchströmung des Wärmeträgermediums geeignetes Rohrsystem zugeordnet. An der dem Sonnenlicht abgewandten Seite des Absorbers ist gegebenenfalls eine Wärmeisolierung angebracht. Der Absorber ist als ein den lasttragenden Teil des Wärmekollektors bildendes Traggerüst ausgestaltet, das unter Anwendung der an sich bekannten Technologie, aus aufeinander gelegten Blechplatten gleichen Materials, zweckmässig durch Walzen, mit einer die Fliessgrenze überschreitenden Kraftwirkung verfertigt wird. Das Rohrsystem wird durch eine, mittels eines unter Überdruck stehenden gasförmigen oder flüssigen Mediums, zweckmässig mit Pressluft aufgeblasene Rohrleitung gebildet. Die Ränder des Absorbers sind — zwecks Erhöhung der Biegesteifheit — in Flanschen umgebogen, in der Umgebung der Flanschen sind Durchbrüche zur Vermeidung eines Wärmeabflusses vorgesehen.

**PATENTANWÄLTE**
Dipl. Ing. Klaus Westphal
Dr. rer. nat. Bernd Mussgnug
Dr. rer. nat. Otto Buchner
Flossmannstrasse 30 a
D-8000 MÜNCHEN 60

0038074

U.Z.:1314.1

## Sonnenkollektor

Die Erfindung betrifft einen Wärmekollektor, insbesondere zur Aufnahme und Verwertung der Wärmeenergie der Sonnenstrahlung. Der Kollektor enthält einen aus Aluminium hergestellten Wärmeaustauscher, den sogenannten Absorber. Der Absorber ist mit einem zur Durchströmung des Wärmeträgermediums geeigneten Rohrsystem versehen. In dem Rohrsystem sind Anschlußstelle für den Ein- und Austritt des Wärmeträgermediums vorgesehen. An der dem Sonnenlicht abgewandten Seite des Absorbers ist eine den Wärmeverlust herabsetzende Wärmeisolierung angebracht, während an der dem Sonnenlicht zugewandten Seite eine lichtdurchlässige Abdeckung angebracht ist.

In dem IV. Quartal des XX. Jahrhunderts ist die Energieproduktion das schwierigste Problem der Menscheit geworden. Es ist eine lange her bekannte Tatsache, indem der unter der festen Erdkruste vorhandene Ölvorrat höchstens bis zur Jahrtausendswende den Bedarf decken kann, so ist es unerlässlich sonstige Energieträger zu erforschen und deren Verwendung zu entwickeln.

Das billigste Verfahren zum Ausgewinnen des elektrischen Stromes, nämlich das Ausgewinnen aus der Wasserenergie, kann nicht überall realisiert werden, nur dort, wo die geographischen bzw. orographischen Gegebenheiten dazu eine Möglichkeit bieten. Die traditionelle Methode zur Erzeugung der elektrischen Energie, indem ein fester Brennstoff (Kohle)

0038074

in den Kraftwerken verbrannt wird, bietet keinen befriedigenden Wirkungsgrad an, während die Umwandlung der nuklearen
Energie in elektrische Energie heutzutag noch zu teuer ist,
so wäre es frühzeitig über die allgemeine Verbreitung dieser
Methode zu reden.

Die bestehenden Schwierigkeiten in Betracht nehmend, beschäftigt man sich -- insbesondere in dem letzten
Jahrzehnt -- in zahlreichen Ländern mit Gedanken, deren
Zielsetzung ist die von der Natur angebotenen Energien in
den Dienst der Menscheit zu stellen; aus denen sollten vor
allem die Bestrebungen erwähnt werden, die die Verwendung
der Ebbe- und Flutbewegungen des Meerwassers, des Windganges und besonders der Sonnenenergie - als Mittel zur Energieerzeugung - erzielen.

Dank der offensichtlichen Tatsache, indem der
Erde eine enorme Wärmeenergie zuteil wird, wird der Verwertung der Sonnenenergie eine primäre Bedeutung beigemessen.
Es wurde nachgewiesen, daß auf einen $Km^2$ der Erdfläche so
viel Wärmeenergie entfällt, die -- wenn eine Verwertung in
der Gesamtheit möglich wäre -- den Bedarf an Energie einer
kleineren Ansiedlung decken könnte.

In der Fachliteratur sind die zur Verwertung der
solaren Energie dienenden Konstruktionen als Sonnenkollektoren bezeichnet, da diese quasi die Energie der Sonnenstrahlung "einsammeln". Einige typische Beispiele für die
Lösung sind die Folgenden.

In der Patentschrift DE-AS 2 513 398 ist eine
zusammenrollbare Konstruktion ohne die sogenannte Abdeckung
beschrieben. Der Sonnenkollektor wird durch die Kombination lichtdurchlässiger und schwarzer Folien ausgestaltet.
Die Folien sind in eigenartiger Weise zueinander befestigt,
wodurch Durchgänge für das Wärmeaustauschmedium entstehen.

Die hier beschriebene Konstruktion stellt einen
Sonnenkollektor ohne etwaige Abdeckung dar, der bloss in
einem Temperaturbereich bis $60C^o$ betriebsfähig ist, so
kann er nur in gewissen Perioden eingesetzt werden. Auch
die grossen Dimensionen sind als ungünstig zu betrachten, die mit einer nachteiligen Zunahme der Wärmekapazität verbunden sind.

Die unter dem Namen "Sonnenkollektorsegment" bekannte Lösung, die in der Patentschrift DE-AS 2 522 154 beschrieben ist, beruht wiederum auf einem anderen Prinzip. Die Elementen werden aus gepressten oder gegossenen Metallprofilen hergestellt, sie können aneinander angeschlossen werden und enthalten Rohrgänge für das Wärmeträgermedium. Der Vorteil dieser Lösung besteht darin, dass ein Teil des inneren Lichtes bzw. die Wärmeausstrahlung des erwähnten Absorbers in Richtung des benachbarten Segments d.h. nutzbringend reflektiert wird.

Die vorgeschlagenen Segmente können jedoch nur aus mit äusserst kostaufwendiger Technologie gefertigten, komplizierten Profilen ausgestaltet werden, wodurch der Preis des ganzen Produktes enorm erhöht wird. Es ist weiterhin als ungünstig zu betrachten, dass weder der Zusammenbau der Segmente in einen Kollektor, noch das Abdecken und Wärmeschutz in einer befriedigenden Weise gelöst wird.

Der in der Patentschrift DE-AS 2 605 927 beschriebene Sonnenkollektor stellt eine der entwickelsten Versionen der bekannten Lösungen dar. Der Absorber wird aus einem gepressten Metallblech hergestellt, als Grundstoff wird Kupfer vorgeschlagen. Er ist aus zwei geprägten Blechlamellen zusammengesetzt und enthält die zur Durchströmung des Wärmeträgermediums erforderlichen rohrförmigen Durchgänge. Das Wärmeträgermedium selbst strömt in den Kunststoffleitungen, die in den rohrförmigen Durchgängen angeordnet sind, und von dem Innendruck des strömenden Mediums an der Metallfläche gepresst werden.

Trotz der Richtigkeit des Grundgedankens weist die Lösung zahlreiche Mangelhaftigkeiten auf. Der wichtigste Nachteil zeigt sich darin, dass die Kunststoffleitung auch bei einer vollkommenen Flächenberührung eine Wärmeisolierschichte zwischen der Metallkonstruktion und dem Wärmeträgermedium bildet, wodurch der Wirkungsgrad der Wärmeübergabe bedeutend beeinträchtigt wird.

0038074

Es ist weiterhin als ungünstig zu betrachten, dass die gegenseitige Verbindung zwischen den rohrförmigen Durchgängen keineswegs eine zuverlässige Dichtigkeit aufweist. Die Gestaltung der Metallamelle ist auch in diesem Fall recht kostaufwendig, während der Wärmeschutz des Umfangsrandes akzessorische Massnahmen, wie z. B. die Verwendung einer Umhüllung aus einem geschäumten Wärmeisolierstoff, beansprucht.

Aus der Patentschrift DE-AS 2 626 958 ist ein Sonnenkollektor bekannt, bei dem die rohrenförmigen Durchgänge nicht einer Mäanderlinie folgen, sondern aus Verteilrohren abgezweigt sind. Der Nachteil dieser Lösung besteht darin, dass der Absorber selbsttragend ist, so muss dieser zur Aufnahme besonderer mechanischer Belastungen mit separaten starken Rändern versehen werden. Das Wärmeträgermedium strömt auch hier in den Kunststoffeinsätzen, wodurch der Wirkungsgrad der Wärmeübergabe keineswegs befriedigend ist.

Das Patent US-PS 3 965 887 bezieht sich auf die Erwärmung von Flüssigkeiten, sowie auf das zu diesem Zwecke dienende Sonnenenergiepaneel. Auch hier ist der Absorber aus zwei Teilen zusammengesetzt, aus denen der Unterteil die zur Durchströmung des Wärmeträgermediums dienenden Durchgänge enthält; der Oberteil ist an dem Unterteil geklebt und schliesst diesen ab.

Aus Konstruktionsgründen kann der Unterteil des Absorbers nur als ein Einzelwerkstück hergestellt werden, so beansprucht die Fertigung ein äusserst kompliziertes und grossdimensioniertes Werkzeug. Es ist ferner als ungünstig zu betrachten, dass wegen der geklebten Verbindungen die Berührungsflächen eine hochgradige geometrische Genauigkeit aufweisen müssen, wodurch die Produktion weitgehend überteuert wird.

Ein weiterer Nachteil besteht darin, dass der Wärmeschutz der Paneele keineswegs befriedigend gelöst ist. Der Grundstoff des Absorbers wird nämlich fortgesetzt und bildet den äusseren Rand, wodurch der Rand eine Wärmebrücke bildet, den Wärmeverlust erhöht und dadurch den Wirkungsgrad des Kollektors verschlechtert.

In der Patentschrift US-PS 3 987 784 ist ein die solare Energie absorbierendes Paneel beschrieben; der Absorber ist mit einem Rohrnetz mit Sammelrohren ausgestaltet und ist wärmetechnisch mit der Absorberplatte verbunden. Es ist als ungünstig zu betrachten, dass das Rohrnetz und der Absorber nicht von demselben Grundstoff verfertigt sind, so ist die Herstellung kompliziert und der Wirkungsgrad bestreitbar. Auch hier entstehen nachteilig wirkende Wärmebrücken an den Rändern, die den Wirkungsgrad beeinträchtigen.

In der Patentschrift US-PS 3 987 783 ist gleicherweise ein mit solarer Energie funktionierendes Heizpaneel beschrieben; bei dieser Lösung sind die zur Leitung des Wärmeträgersmediums dienende Rohrleitung und die Absorberlamelle aus verschiedenen Grundstoffen hergestellt. Die Absorberlamelle umschliesst mehr oder weniger die das einzige Rohr enthaltende, das Wärmeträgermedium fördernde Leitung. Auch hier ist es nachteilig, dass die strukturellen Elemente aus verschiedenen Grundstoffen ausgestaltet sind.

Ein weiterer Nachteil besteht darin, dass bloss ein einziges Rohr vorhanden ist, das die Breite der Absorberlamelle beschränkt. Es ist wohlbekannt, dass eine grosse Breite den Wirkungsgrad des Kollektors rapid herabsetzt. Der hohe spezifische Bedarf an Material kann gleicherweise auf diese strukturelle Gegebenheit zurückgeführt werden.

In der Patentschrift US-PS 4 023 557 ist eine Lösung zur Gestaltung des wichtigsten strukturellen Elements des Sonnenkollektors, des Absorbers, vorgeschlagen, wobei die Lösung sich in erster Reihe auf die Verbindung zwischen der Absorberlamelle und der Rohrleitung bezieht. Der Grundgedanke ist auch hier richtig, die Fertigungstechnologie ist jedoch kostaufwendig, dabei ist weder die Produktivität, noch die wärmetechnische Lösung der ganzen Konstruktion zweckdienlich. Die Ursache davon ist,

0038074

dass die gegenseitige molekulare Verbindung zwischen der Rohrleitung und dem den Absorber bildenden Planblech -- für welche erfindungsgemässe ein Kleberverfahren vorgeschlagen ist -- sich nur auf eine schmale Zone der Rohrleitung beschränkt.

Bei der in der Patentschrift US-PS 4 055 162 beschriebenen Lösung, die sich ebenfalls auf einen Sonneenergiekollektor bezieht, kommt die Absorberplatte mehr oder weniger auf der gleichen Weise, aber entlang einer grösseren Fläche mit der Rohrleitung in Berührung. Der Wirkungsgrad der theoretisch auf einer grösseren Fläche vor sich gehenden Wärmeübergabe wird jedoch dadurch beeinträchtigt, dass die Absorberplatte und die Rohrleitungen aus verschiedenen Materialien verfertigt sind. Ein bedeutender Verlust bei dem Wirkungsgrad entsteht auch dadurch, dass die Ränder der Absorberplatten mit gar keinem Wärmeschutz versehen sind.

Der Grundgedanke der Patentschrift US-PS 4 066 063, betitelt "Konstruktion zur Übertragung der Sonnenenergie auf ein flüssiges Medium" ist auf die Bestrebung zurückzuführen, dass die Konstruktion mit den üblichen Sonnenkollektoren verglichen, aus Kunststoff, unter Anwendung einer vereinfachten Technologie hergestellt werden könne.

Die synthetischen Materialien weisen jedoch eine recht ungünstige Wärmeleitfähigkeit auf, so kann das gesetzte Ziel bloss mit komplizierten Massnahmen und mit einem bestreitbaren Erfolg realisiert werden. Es ist ferner als ungünstig zu betrachten, dass die Absorberplatte an der Tragung der mechanischen Belastungen überhaupt nicht teilnimmt, wodurch sich ein Mehraufwand an Materialien und eine Unwirtschaftlichkeit im Bezug der ganzen Konstruktion ergibt.

Der Erfindung wurde das Ziel gesetzt die Mangelhaftigkeiten der bekannten Sonnenkollektoren zu beseitigen, insbesondere den Wirkungsgrad zu erhöhen, einen gegenüber den bekannten Lösungen günstigeren Wärmeschutz zu erzielen und die Herstellung zu erleichtern. Es besteht weiterhin die Forderung, dass die Konstruktion als ein universeller Wärmekollektor -- neben der Verwertung der Wärmeenergie der Sonnenstrahlung -- auch zu sonstigen Zwecken, z. B. zur Ausnützung des Wärmeinhalts der atmosphärischen Luft geeignet sei, desweiteren zwischen dem Rohrnetz und dem Absorber eine je vollkommenere Wärmeübetragung erzielt werden könne.

Die Erfindung beruht auf der Erkenntnis, indem die Mangelhaftigkeiten der bekannten Lösungen überraschenderweise dadurch eliminiert werden können, wenn der Absorber als ein steife, selbsttragende Konstruktion ausgeführt wird und die das strömende Medium fördernde Rohrleitung und der Absorber aus dem gleichen Material verfertigt werden. Auf dieser Weise ist keine, eine Isolierwirkung ausübende Zwischenschicht zwischen den beiden vorhanden, wobei zweckdienlich die den Strömungsweg des Wärmeträgermediums bestimmenden Rohrleitungen in dem Absorber enthalten werden können.

Dem gesetzten Ziel entsprechend besitzt der erfindungsgemässe, ins besondere zur Aufnahme und Verwertung der Wärmeenergie der Sonnenstrahlung dienende Sonnenkollektor einen aus Aluminium gefertigten Wärmeaustauscher, den sogenannten Absorber, welchem ein zur Durchströmung des Wärmeträgers geeignetes Rohrsystem zugeordnet ist. Das Rohrsystem ist mit Ein- und Austrittsöffnungen für das Wärmeträgermedium versehen. An der lichtabgewandten Seite des Absorbers sind den Wärmeverlust vermindernde Wärmeisolierungen aufgetragen, während an der dem Sonnenlicht zugewandten Seite gegebenfalls eine lichtdurchlässige Abdeckung vorgesehen ist. Erfindungsgemäss ist der Absorber als ein, eine hohe Beigesteifheit aufweisendes, den lasttragenden Teil des Wärmekollektors bildendes Traggerüst ausgestaltet, das unter Anwendung der an sich bekannten Technologie, aus aufeinander gelegten Blechplatten gleichen Materials, zweckmässig durch Walzen, mit einer die Fliessgrenze überschreitenden Kraftwirkung verfertigt wird, während das Rohrsystem durch eine, mittels eines unter Überdruck stehenden gasförmigen oder flüssigen Mediums, vorteilhaft mit Pressluft aufgeblasene Rohrleitung gebildet wird.

Eine weitere Charakteristik des erfindungsgemässen

0038074

Sonnenkollektors besteht darin, dass die Ränder des Absorbers zwecks Erhöhung der Biegesteifheit in Flanschen umgebogen sind und entlang der Ränder Durchbrüche vorgesehen sind, durch die ein Wärmeabfluss vermieden wird.

An der dem Sonnenlicht zugewandten Seite des Absorbers ist eine ein- oder mehrschichtige lichtdurchlässige Abdeckung angebracht, während an der Rückseite ein zweckmässig aus Schaummaterial verfertigte Wärmeisolierpolster angeordnet ist. Der Wärmeisolierpolster ist entweder aufgeklebt und/oder mechanisch, z. B. mit Klauen an dem Absorber befestigt.

Bei einer vorteilhaften Ausführung des erfindungsgemässen Sonnkollektors sind der Flanschteil des Absorbers und der Rand des Wärmeisolierpolsters, ohne die Anwendung eines Rahmens, bloss mit einer Decklatte abgedeckt. Die Decklatte ist an dem Flansch des Absorbers befestigt und kann gegebenfalls mit einem zur Befestigung der lichtdurchlässigen Abdeckung geeigneten Vorsprung und/oder mit einem über den Rand des Wärmeisolierpolsters gebogenen Vorsprung versehen werden.

Bei einer weiteren zweckmässigen Ausführung des Sonnenkollektors sind die Ein- und Austrittsöffnungen für das Wärmeträgermedium als sich der Rohrleitung anschliessende, in die dem Sonnenlicht abgewandte Seite einmündende Rohrstutzen ausgebildet.

Mit den bereits bekannten Lösungen verglichen weist der erfindungsgemässe Sonnenkollektor zahlreiche Vorteile auf, die überwiegend darauf zurückgeführt werden können, dass der Absorber als ein selbsttragender steifer Hauptträger der ganzen Konstruktion ausgestaltet ist und die Ränder des erwähnten Hauptträgers in Flanschen umgebogen sind, wodurch ein separater Rahmen sich erübrigt.

Mit Hinsicht darauf, dass der erfindungsgemässe Sonnenkollektor kein an der Wärmeübergabe nicht teilnehmendes Plusmaterial enthält, konnten laut unserer Berechnungen eine Gewichtsverminderung von etwa 40 % und eine Kostensenkung von mindestens 25 - 30 % erreicht werden. Ein weiterer Vorteil zeigt sich darin, dass sowohl der Absorber, wie auch die Rohrleitungen mit einer einfachen Technologie und vollkommen abfallfrei hergestellt werden können.

Im Laufe der Entwicklung des Sonnenkollektors stieg uns der Gedanke auf, ob die Gestaltung der Flanschen aus dem Absorber nicht zu einem übermässigen Wärmeverlust führen würde. Die Erfahrungen haben jedoch gezeigt, dass die entlang der Ränder vorgesehenen Durchbrüche den Wärmeabfluss mit gebührender Wirksamkeit zu verhindern fähig sind.

Die Erfindung wird anhand eines vorteilhaften Ausführungsbeispiels, mit Hilfe der beiliegenden Zeichnungen näher erläutert. Es zeigen:

Figur 1    den Absorber des erfindungsgemässen Sonnenkollektors,

Figur 2    den Querschnitt entlang der Ebene II-II laut Figur 1,

Figur 3    den Querschnitt des Sonnenkollektors,

Figur 4    eine mögliche Ausführung der Verbindung zwischen dem Absorber und der Decklatte,

Figur 5    eine weitere Version der Verbindung.

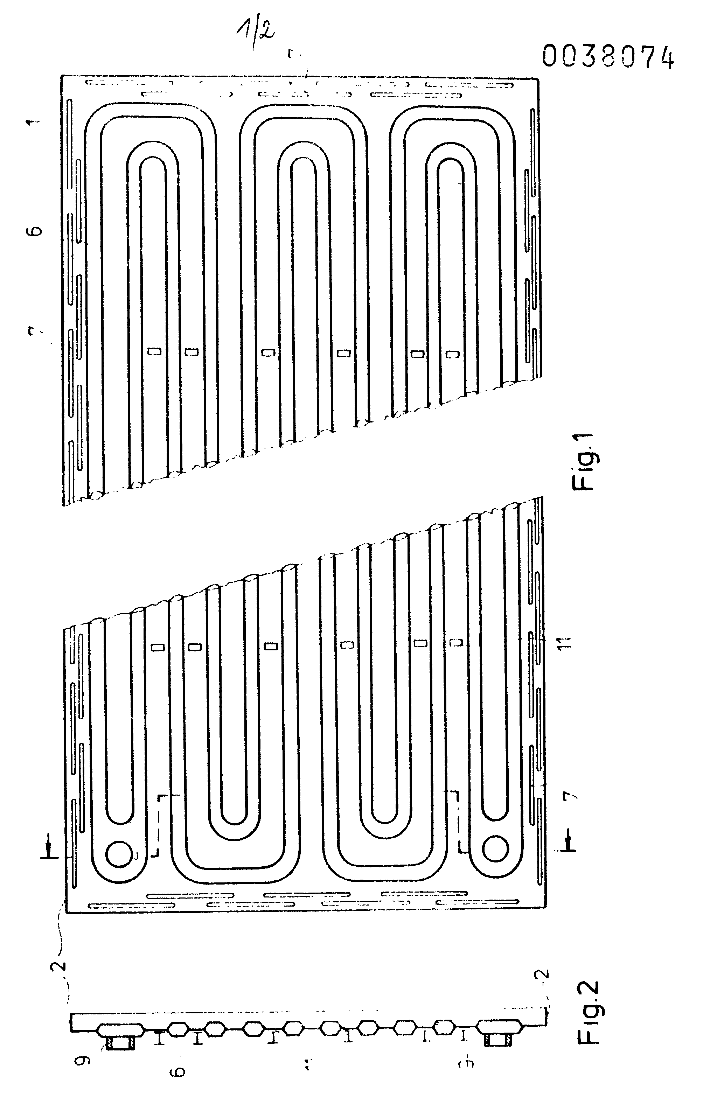

In Figur 1 sind der Absorber 1 und die in dem Absorber ausgestaltete, einer Mäanderlinie ähnliche Rohrleitung dargestellt. Aus der Figur 2 ist es ersichtlich, dass die Ränder des Absorbers 1 mit einer rechtwinkeligen Verbiegung in die Flanschen 2 umgebogen sind. In der Umgebung der Flanschen 2 sind die einen Wärmeabfluss verhindernden Durchbrüche 7 vorgesehen, die sich theoretisch in mehreren Reihen - z. B. schachbrettartig verschoben - in der Umgebung der Ränder des Absorbers erstrecken können. Die Aufgabe der Durchbrüche 7 besteht darin den übermässigen Wärmeverlust über die Flanschen 2 zu verhindern.

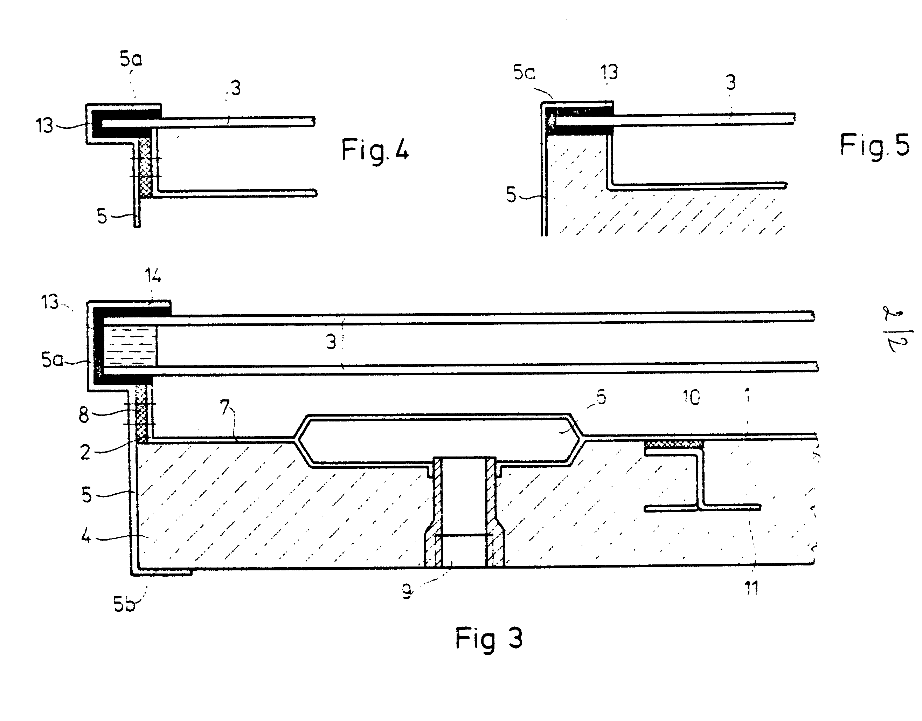

In der Umgebung der Ränder des Absorbers sind diejenigen Teile der Rohrleitung 6 angeordnet, die den zum Ein- und Austritt des Wärmeträgermediums dienenden Anschlußstutzen zugeordnet sind. Die dem Sonnenlicht abgewandte Seite des Absorbers kann mit den Klauen 11 versehen werden, unter Zuhilfenahme deren der Wärmeisolierpolster 4 (siehe Figur 3) an dem Absorber befestigt werden kann.

Der Wärmeisolierpolster wird aus irgendwelchem Kunststoffschaum, wie z. B. Polystyrolschaum verfertigt. Vorteilhafterweise sind die Klauen derweise an dem Absorber 1 befestigt, indem zwischen deren Flächen die Wärmeisolierplatte 10 eingefügt ist, wodurch der Wärmeabfluss von dem Absorber über die Klauen 11 verhindert werden kann. Aus demselben Grund werden die Anschlußstutzen 9 aus einem Wärmeisolierstoff hergestellt und die wärmeisolierenden Flächenstreifen 8 zwischen die die Gesamtheit der Flanschen 2 und des Sonnenkollektors quasi als ein Rahmen umschliessenden Decklatten 5 eingesetzt.

Der Decklatte 5 werden - wie aus den Figuren 3, 4 und 5 hervorgeht - werden mehrere Aufgaben zugeteilt. Über die bereits erwähnte Verbindung mit den Flanschen 3 besteht ihre wichtigste Funktion in der Befestigung bzw. Einfassung der lichtdurchlässigen Abdeckungen 3.

Selbstverständlich ist die lichtdurchlässige Abdeckung 3 an der dem Sonnenlicht zugewandten Seite des Absorbers 1 angebracht und ist aus Glas, Kunststoff und/oder aus irgendwelcher durchsichtigen Folie ausgestaltet. Die lichtdurchlässige Abdeckung 3 kann aus einer oder mehreren Schichten bestehen.

Bei der in Figur 3 dargestellten zweischichtigen Ausführung kann zum Beispiel das Einsatzprofil, das gleichzeitig die Aufgabe eines Distanzhalters erfüllt, entlang der Ränder angeordnet werden. Der Vorsprung 5a der Decklatte 5 dient zur Befestigung der lichtdurchlässigen Abdeckung 3, während der Vorsprung 5b derselben Decklatte 5 den Wärmeisolierpolster 4 befestigt.

Obrigens kann der Wärmeisolierpolster 4 an der dem Sonnenlicht abgewandten Seite mit einer Schutzfolie 12 versehen werden, die den Wirkungsgrad des Sonnenkollektors bedeutend erhöht. Aus den Figuren 4 und 5 ist es wohl ersichtlich, dass die lichtdurchlässige Abdeckung 3 über die Dichtungsflanschen 13 in den Vorsprung 5a der Decklatte 5 eingeklemmt ist.

PATENTANSPRÜCHE:

1. Sonnenkollektor insbesondere zur Aufnahme und Verwertung der Wärneenergie der Sonnenstrahlung, der einen aus Aluminium gefertigten Wärmeaustauscher, den sogenannten Absorber besitzt und dem Absorber ein zur Durchströmung des Wärmeträgermediums geeignetes Rohrsystem zugeordnet ist, desweiteren Ein- und Austrittsöffnungen für das Wärmeträgermedium vorgesehen sind, ferner an der lichtabgewandten Seite des Absorbers eine den Wärmeverlust vermindernde Wärmeisolierung angebracht ist, und an der dem Sonnenlicht zugewandten Seite gegebenenfalls eine lichtdurchlässige Abdeckung vorhanden ist, d a d u r c h   g e -
k e n n z e i c h n e t , dass der Absorber (1) als ein über eine Biegesteifheit verfügendes, den lasttratgenden Teil des Wärmekollektors bildendes Traggerüst ausgestaltet ist, das unter Anwendung der an sich bekannten Technologie, aus aufeinander gelegten Blechplatten gleichen Materials, zweckmässig durch Walzen, mit einer die Fliessgrenze überschreitenden Kraftwirkung verfertigt wird, während das Rohrsystem durch eine, mittels eines unter Überdruck stehenden gasförmigen oder flüssigen Mediums, vorteilhaft mit Pressluft aufgeblasene Rohrleitung (6) gebildet wird.

2. Sonnenkollektor nach Anspruch 1, d a d u r c h g e k e n n z e i c h n e t , dass die Ränder des Absorbers (1) zwecks Erhöhung der Biegesteifheit in Flanschen (2) umgebogen sind und in der Umgebung bzw. entlang der Ränder Durchbrüche (7) vorgesehen sind, durch die ein Wärmeabfluss vermieden wird.

3. Sonnenkollektor nach Anspruch 1 oder 2, d a - d u r c h   g e k e n n z e i c h n e t , dass an der dem Sonnenlicht zugewandten Seite des Absorbers (1) eine ein- oder mehrschichtige lichtdurchlässige Abdeckung (3) angebracht ist, während an der Rückseite ein zweckmässig aus Schaummaterial verfertigter Wärmeisolierpolster (4) angeordnet ist.

4. Sonnenkollektor nach Anspruch 3, d a d u r c h g e k e n n z e i c h n e t , dass der Wärmeisolierpolster (4) entweder aufgeklebt und/oder mechanisch, z. B. mit Klauen (11) an dem Absorber (1) befestigt ist.

5. Sonnenkollektor nach Anspruch 3 oder 4, d a - d u r c h g e k e n n z e i c h n e t , dass der Flanschteil (2) und der Rand des Wärmeisolierpolsters (4) ohne die Anwendung eines Rahmens, bloss mit einer Decklatte (5) abgedeckt ist.

6. Sonnenkollektor nach Anspruch 5, d a d u r c h g e k e n n z e i c h n e t , dass die Decklatte (5) an den Flanschen (2) des Absorbers (1) befestigt ist, und gegebenenfalls mit einem, zur Befestigung der lichtdurchlässigen Abdeckung (3) geeigneten Vorsprung (5a) und/oder mit einem über den Rand des Wärmeisolierpolsters (4) gebogenen Vorsprung (5b) versehen ist.

7. Sonnenkollektor nach jedwelchem der Ansprüche 1 - 6, d a d u r c h g e k e n n z e i c h n e t , dass die Ein- und Austrittsöffnungen für das Wäreträgermedium als sich der Rohrleitung anschliessende, in die dem Sonnenlicht abgewandte Seite des Absorbers (1) einmündende Rohrstutzen (9) ausgebildet sind.

Fig.2

Fig.1

1/2

0038074

Fig. 4

Fig. 5

Fig 3

2/2

0038074